# FASCICULE DE BREVET EUROPEEN

(11) **EP 2 192 097 B1**
(45) Date de publication et mention de la délivrance du brevet: **25.02.2015**
(21) Numéro de dépôt: 09169048.7
(22) Date de dépôt: 31.08.2009
(51) Int. Cl.: C04B 37/00

(54) **Procédé d'assemblage moyennement réfractaire de pièces en matériaux a base de sic par brasage non réactif sous atmosphère oxydante, suspension de brasure, et joint et assemblage obtenus par ce procédé.**
Mittelmäßig feuerfestes Verbindungsverfahren von Teilen aus Materialien auf SiC-Basis durch nicht reaktives Löten unter oxidierender Atmosphäre, Lötpasten-Suspension und durch dieses Verfahren erhaltene Fuge und Verbindung
Moderately refractory method for assembling parts made from SiC-based materials by non-reactive brazing in an oxidising atmosphere, brazing suspension and seal and assembly obtained by this method.

(30) Priorité: 01.09.2008 FR 0855857
(43) Date de publication de la demande: 02.06.2010
(73) Titulaire: Commissariat à l'Énergie Atomique et aux Énergies Alternatives, 75015 Paris (FR)
(72) Inventeur: Mailliart, Olivier, 14000 Caen (FR); Chaumat, Valérie, 38760, SAINT-PAUL-DE-VARCES (FR); Hodaj, Fiqiri, 38100, GRENOBLE (FR)
(74) Mandataire: Augarde, Eric

(56) Documents cités:
- FR-A1- 2 538 370

## Description

### DOMAINE TECHNIQUE

La présente invention est relative à un procédé d'assemblage moyennement réfractaire de pièces en matériaux à base de carbure de silicium par brasage non réactif sous atmosphère oxydante, plus précisément sous atmosphère contenant de l'oxygène, notamment sous air, avec des compositions de brasure non réactives, afin notamment de réaliser des composants entièrement à base de carbure de silicium.

L'invention a trait, en outre, à des suspensions, pâtes de brasure comprenant des compositions de brasure et un liant organique, ainsi qu'au joint et à l'assemblage moyennement réfractaire obtenus par ce procédé.

Par matériaux "à base de carbure de silicium", on entend généralement un matériau dont la teneur en SiC est supérieure ou égale à 50 % en masse, de préférence supérieure ou égale à 80% en masse, de préférence encore de 100% en masse, dans ce dernier cas on peut dire que le matériau est constitué ou composé de carbure de silicium.

Ces matériaux à base de carbure de silicium peuvent être notamment du carbure de silicium pur tel que du carbure de silicium pur α (SiCα) ou β (SiCβ) ou des matériaux composites à base de SiC tels que des composite à fibres et/ou à matrice de carbure de silicium.

Le matériau à base de carbure de silicium peut se présenter sous la forme de fibres de carbure de silicium ou de poudre de carbure de silicium frittée ou liée par un liant en céramique.

Le domaine technique de l'invention peut être défini comme étant celui du brasage mis en oeuvre à des températures généralement de 1100°C à 1650°C.

Les assemblages concernés par la présente invention sont donc généralement considérés comme « moyennement réfractaires » c'est-à-dire que les températures maximales d'utilisation de ces assemblages vont généralement jusqu'à 1250°C et sont généralement comprises entre 850°C et 1200°C en fonction de la composition de l'alliage de brasage ou de la composition de brasure.

Ces assemblages peuvent rentrer dans la fabrication de composants de formes complexes nécessitant à la fois une très bonne tenue mécanique entre les substrats à base de carbure de silicium et une étanchéité satisfaisante de part et d'autre du joint.

### ÉTAT DE LA TECHNIQUE ANTÉRIEURE

On sait qu'il est difficile de fabriquer des pièces de grandes dimensions en céramique, en particulier, en SiC. En effet, les tolérances après frittage des composants primaires en carbure de silicium de grandes dimensions sont mal maîtrisées et l'usinage de ces composants est inacceptable pour des raisons de coût.

Par ailleurs, et pour les mêmes raisons, il est généralement difficile de fabriquer des pièces de forme complexe avec des composés à base de carbure de silicium.

Il est donc souvent préférable de fabriquer les pièces ou structures de grande dimension et/ou de forme complexe à partir d'éléments en céramiques de forme simple et/ou de petite taille, puis d'assembler ces éléments pour réaliser la structure finale.

Une telle technique est notamment nécessaire pour fabriquer des structures du type échangeur de chaleur, brûleurs, résistances thermiques de composants de structure en carbure de silicium ayant une température d'utilisation, par exemple, jusqu'à 1200°C.

Du fait des températures élevées, voisines par exemple de 1000°C, mises en oeuvre dans les applications des céramiques telles que le carbure de silicium, l'assemblage de ces céramiques par collage avec des adhésifs organiques est exclus, car les températures d'usage de ce type d'assemblage ne peuvent dépasser au maximum 200°C.

Les assemblages purement mécaniques, par exemple par agrafage ou par vissage n'assurent qu'un contact partiel et aléatoire entre les pièces. Les assemblages ainsi obtenus ne peuvent pas être étanches.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques du fait qu'on ne peut pas faire fondre un substrat ou une pièce en céramique, et que, en particulier, le carbure de silicium se décompose avant fusion.

Des techniques courantes pour réaliser des assemblages réfractaires de céramiques sont le soudage par diffusion en phase solide, et l'assemblage frittage ou cofrittage.

Dans l'assemblage par soudage diffusion, on applique à haute température une pression au niveau des interfaces pour permettre une inter-diffusion atomique entre les deux substrats. La température doit rester toujours inférieure à la température de fusion du matériau le moins réfractaire et il n'y a donc aucune phase liquide dans le système. Ce type d'assemblage est réalisé soit sous presse dans une seule direction, soit dans une enceinte isostatique. Le soudage diffusion est bien adapté aux assemblages entre deux alliages métalliques et très peu à l'assemblage de matériaux céramiques car les atomes constituant la céramique diffusent très peu au niveau du joint. En outre, le procédé est rédhibitoire d'un point de vue mécanique, car il nécessite de mettre en compression les substrats et les matériaux poreux et fragiles comme des substrats à base de carbure de silicium, risquent d'être fortement endommagés lors de ce chargement mécanique en compression.

L'assemblage-frittage ou cofrittage de pièces en SiC, nécessite également de hautes pressions mais aussi de hautes températures et durées de palier importantes, car ce procédé est basé sur le principe de l'inter-diffusion entre les éléments en SiC.

En d'autres termes, le soudage par diffusion en phase solide ainsi que l'assemblage frittage présentent le désavantage d'être contraignants du point de vue de leur mise en oeuvre car :
- pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).
- dans le cas du cofrittage ou assemblage frittage, les mêmes problèmes demeurent (forme des pièces, complexité de mise en oeuvre) avec en plus la nécessité de contrôler le frittage d'une poudre d'apport à intercaler entre les deux matériaux à assembler.
- ces deux techniques nécessitent en outre l'utilisation de paliers de longue durée (une à plusieurs heures) à haute température puisque les processus mis en jeu font intervenir la diffusion à l'état solide.

Il ressort de ce qui précède, et en résumé, que afin de garantir notamment une bonne tenue mécanique et une étanchéité satisfaisante au niveau de l'assemblage, seuls des procédés utilisant une phase liquide, comme le brasage, peuvent être envisagés.

Le brasage est une technique peu coûteuse, facile de mise en oeuvre, qui est la plus couramment utilisée. Des pièces de forme complexe peuvent être réalisées en faisant du brasage, et les opérations de brasage se limitent à placer entre (brasage de type « sandwich ») les pièces à assembler ou à proximité (brasage de type capillaire) du joint entre les deux pièces, un alliage de brasage, appelé brasure, ou un alliage d'apport, cet alliage étant capable de mouiller et de s'étaler sur les interfaces à assembler pour remplir le joint entre les pièces et à faire fondre cet alliage. Après refroidissement, la brasure se solidifie et assure la cohésion de l'assemblage.

De nombreuses compositions de brasure pour les pièces en matériaux à base de carbure de silicium sont peu réfractaires. Il s'agit généralement de compositions de brasure constituées par des alliages métalliques ayant un point de fusion inférieur, voire très inférieur, à 1000°C [1,2,3]. Une telle température de fusion est nettement insuffisante pour les applications à haute température voisines de 1 000°C ou plus, par exemple, jusqu'à 1250°C.

Notons en outre que la mise en oeuvre de ces brasures ne peut pas se faire sous air, à cause des problèmes d'oxydation de la brasure.

Par ailleurs, la plupart des éléments chimiques qui font partie de ces compositions de brasure métalliques sont fortement réactifs avec le carbure de silicium dès 500°C et créent des composés fragiles.

Par conséquent, dans le cas d'un brasage mis en oeuvre au-dessus de 1000°C, de telles compositions de brasure ou alliages de brasage attaqueraient chimiquement les matériaux à base de carbure de silicium.

En outre, les alliages les moins réactifs sont aussi les moins réfractaires, comme par exemple, l'alliage AgCuTi avec une matrice en Ag-Cu et un élément actif Ti à faible concentration. Pour les applications plus particulièrement visées par l'invention qui sont celles d'un assemblage moyennement réfractaire, avec une température d'utilisation des assemblages pouvant aller généralement jusqu'à 1250°C, toutes les compositions de brasure constituées principalement d'argent ou d'argent-cuivre, de cuivre, de nickel, de fer ou de cobalt, de platine, de palladium ou d'or sont donc à exclure à cause de leur forte réactivité et du fait qu'il est impossible de les mettre en oeuvre sous air.

Afin de résoudre les problèmes posés par les compositions de brasure constituées par des alliages métalliques et notamment par des alliages métalliques réactifs, des compositions de brasure ou formulations d'alliages de brasage à base de silicium et à température de fusion supérieure à 1200°C [4, 5, 6] ont été proposées.

Ces alliages de brasage constitués de siliciures métalliques présentent l'avantage de bien mouiller sous vide ou sous atmosphère neutre le carbure de silicium tout en étant très peu réactifs, et d'assurer une bonne interface mécanique étanche entre les substrats à base de carbure de silicium. En revanche, le procédé de brasage utilisant ces compositions de brasure à base de silicium ne peut pas être mis en oeuvre sous air.

En effet, sous air, il se produit une oxydation des brasures et du SiC, ce qui ne permet pas un bon mouillage. Par conséquent, les compositions de brasure, alliages de brasage riches en silicium ne sont pas adaptés au brasage à température supérieure à 1000°C sous air.

Par ailleurs, des compositions de brasure, alliages de brasage, à base d'un mélange d'oxydes, pour l'assemblage de matériaux à base de carbure de silicium ont été proposées.

Avec de telles compositions de brasure, le procédé de brasage est, dans la majorité des cas, mis en oeuvre sous une atmosphère protectrice, par exemple de gaz neutre, ou sous vide, entre 700 et 1600°C selon la composition de l'alliage de brasage.

FERRARIS et col. ont ainsi réalisé l'assemblage sous argon de composites SiC / SiC avec des alliages tels que l'alliage ZnO-B₂O₃-Mgo-SiO₂-Al₂O₃-Na₂O mis en oeuvre à 1200°C [7] et l'alliage 49,77 CaO-50,23 Al₂O₃ (% massique) mis en oeuvre à 1500°C [8, 9].

Le document FR-A-2 538 370 décrit également le brasage sous argon à 1400°C du SiC avec une composition de brasure constituée de SiO₂-Al₂O₃-MgO-Y₂O₃ dont la composition en % massique est la suivante : 32,5 % ≤ SiO₂+MgO ≤ 77,5% ; 17,5 %≤ Al₂O₃ ≤62,5% ; 5 % ≤ Y₂O₃ ≤ 50 %) [10].
PERHAM et col. ont réalisé le brasage du SiC sous vide entre 1465°C et 1550°C avec la composition de brasure 52,5 % SiO₂ - 32,0% Al₂O₃ - 13,5%MgO-2,0%BaO [11].
TAMARI et col. proposent une composition de brasure à base de Si₃N₄-Y₂O₃-La₂O₃-MgO pour braser le carbure de silicium entre 1600 et 1800°C sous argon [12].
Enfin, LEE et col. [13] décrivent le brasage du SiC sous argon entre 1350 °C et 1530°C à l'aide d'une brasure de composition 60 SiO₂- 25 Al₂O₃-15MgO (% massique).

Pour résumer, peu de travaux présentent des opérations de brasage sous atmosphère oxydante, notamment sous air, du carbure de silicium. Les résultats de brasage sous argon ou sous vide ne peuvent pas être transposés à une atmosphère oxydante, notamment à l'air, en particulier en ce qui concerne le comportement physico-chimique vis-à-vis de l'environnement (diffusion de l'oxygène dans le mélange de verre, ...).

Enfin, le brasage sous air du carbure de silicium à partir d'un mélange d'oxydes a été réalisé par LIPMANN et col. [14, 15]. Ces auteurs proposent un procédé d'assemblage sous air du SiC par brasage assisté par laser avec une composition de brasure du système Y₂O₃-SiO₂-Al₂O₃ ou du système ZrO₂-SiO₂-Al₂O₃.

L'inconvénient principal du procédé de brasage assisté par laser, mis en oeuvre dans ces documents, est qu'il n'est pas adapté à toutes les géométries et/ou tailles de pièces à assembler. En particulier, le procédé de brasage assisté par laser ne convient pas aux pièces de grandes dimensions, plus précisément aux pièces comportant de grandes surfaces à braser, et/ou de forme complexe.

Ainsi, les surfaces assemblées dans les documents [14, 15] sont très petites, de l'ordre du 1 cm².

D'autre part, ce procédé de brasage assisté par laser est onéreux.

Enfin, les compositions de brasure décrites dans les documents [14] et [15] résistent à de hautes températures, à savoir à des températures au-delà de 1600°C, et exigent en conséquence que les opérations de brasage soient aussi menées à haute température, ce qui risque de dégrader le matériau à braser à base de SiC tel que du SiC fritté ou un composite à base de SiC, si le séjour à ces hautes températures n'est pas d'une durée limitée, car il se produit alors une oxydation du SiC précisément du fait que le brasage est réalisé sous air.

On peut dire que les compositions de brasure, décrites dans les documents [14] et [15] sont limitées à une mise en oeuvre très localisée et très rapide pour de faibles surfaces à braser. Ceci restreint donc fortement les applications des compositions de brasure décrites dans les documents [14] et [15].

Il existe donc, au vu de ce qui précède, un besoin pour un procédé permettant de réaliser, sous une atmosphère oxydante et notamment sous air, le brasage à une température supérieure à 1100°C, de pièces en matériaux à base de carbure de silicium quelle que soit leur forme et/ou leur taille et d'obtenir ainsi un assemblage moyennement réfractaire c'est-à-dire avec une température d'utilisation maximale pouvant aller jusqu'à 1250°C, par exemple entre 850°C et 1200°C.

Il existe en particulier un besoin pour un procédé de brasage, et pour la composition de brasure associée, permettant de réaliser sous une atmosphère oxydante, notamment sous air, le brasage moyennement réfractaire de pièces à base de carbure de silicium de grandes tailles et/ou de géométries complexes, présentant notamment des surfaces à braser importantes.

Il existe en outre un besoin pour un procédé d'assemblage par brasage et pour la composition de brasure associée qui assurent à la fois une étanchéité du joint entre deux pièces en matériau à base de carbure de silicium, un bon remplissage du joint par la brasure ainsi qu'une tenue mécanique de l'assemblage satisfaisante au-dessus de 500°C et jusqu'à 850°C, voire 1200°C ou 1250°C, selon la composition de brasure.

En d'autres termes, il existe actuellement un besoin non satisfait pour un procédé de brasage et pour la composition de brasure associée, qui permettent de réaliser, par brasage sous une atmosphère oxydante, notamment sous air, entre deux matériaux à base de SiC, des liaisons fortes, mais aussi moyennement réfractaires, c'est-à-dire pouvant notamment résister à des températures pouvant aller jusqu'à 850°C et même au-delà, c'est-à-dire 1200°C ou 1250°C.

Aucun des procédés de brasage et des compositions de brasure décrits dans les documents de l'art antérieur ne répond aux besoins énumérés ci-dessus.

En particulier, aucun des procédés et des compositions de l'art antérieur ne remplit simultanément les critères suivants, mis en évidence par les inventeurs, et qui sont fondamentaux pour réaliser des composants de structure en céramique, telle que du SiC impliquant des joints, moyennement réfractaires :
1) la composition de brasure doit permettre de réaliser une liaison forte entre les deux pièces en matériau à base de carbure de silicium, ce qui implique une composition de brasure non réactive, c'est-à-dire chimiquement compatible avec le carbure de silicium, et qui ne forme pas de composés fragiles avec celui-ci.
2) la composition de brasure doit fondamentalement être compatible avec une atmosphère de brasage oxydante constituée par exemple par un gaz contenant de l'oxygène tel que de l'air ou de l'argon oxygéné et ne doit pas être dégradée par celle-ci.
3) la composition de brasure doit bien mouiller le carbure de silicium et bien adhérer à celui-ci.
4) la composition de brasure doit être compatible avec tous les dispositifs de chauffage notamment les dispositifs de chauffage rapides et/ou localisés.
5) la composition de brasure doit avoir un coefficient de dilatation adapté au SiC, c'est-à-dire proche du coefficient de dilatation, de celui-ci pour supprimer toute contrainte résiduelle qui pourrait apparaître au sein du joint lors du refroidissement et garantir qu'il n'y ait pas d'amorce de fissures, ce qui serait dommageable à la tenue mécanique de l'assemblage.
6) la composition de brasure doit être constituée d'un nombre limité d'éléments, afin de faciliter sa préparation et sa mise en oeuvre.
7) le joint doit être moyennement réfractaire, c'est-à-dire avec une température de brasage généralement de 1100°C à 1650°C lui permettant de résister à des températures d'usage généralement de 850°C à 1200°C et plus, par exemple 1250°C, mais tout en n'étant pas trop réfractaire pour ne pas avoir une température de brasage trop élevée susceptible de provoquer éventuellement une oxydation de la composition sous une atmosphère oxydante et notamment sous air.

Enfin, le procédé et la brasure associée doivent permettre le brasage, l'assemblage de tout type de matériau à base de carbure de silicium et doivent pouvoir facilement s'adapter à toute céramique spécifique à base de carbure de silicium.

Le but de l'invention est donc de fournir un procédé d'assemblage par brasage de pièces ou composants en matériaux à base de carbure de silicium qui réponde, entre autres, aux besoins cités plus haut, qui satisfait, entre autres, à l'ensemble des exigences et critères mentionnés ci-dessus, qui élimine les inconvénients, défauts, limitations rencontrés avec les procédés de l'art antérieur, et qui permette notamment de réaliser des joints moyennement réfractaires, à ténacité élevée et exempts de fissuration aussi bien lors de l'élaboration du joint que dans les conditions du fonctionnement.

### EXPOSÉ DE L'INVENTION

Ce but, et d'autres encore, sont atteints conformément à l'invention par un procédé d'assemblage moyennement réfractaire d'au moins deux pièces en matériaux à base de carbure de silicium par brasage non réactif sous une atmosphère oxydante, dans lequel on met en contact les pièces avec une composition de brasure non réactive et on chauffe sous une atmosphère oxydante l'ensemble formé par les pièces et la composition de brasure à une température de brasage suffisante pour faire fondre la composition de brasure afin de former un joint moyennement réfractaire, dans lequel la composition de brasure non réactive est une composition A constituée de Silice (SiO₂), d'alumine (Al₂O₃), et d'oxyde de calcium (CaO), ou bien une composition B, constituée d'alumine (Al₂O₃), d'oxyde de calcium (CaO), et d'oxyde de magnésium (MgO).

Le procédé selon l'invention, qui est un procédé de brasage sous une atmosphère oxydante, notamment sous air, mettant en oeuvre une composition de brasure spécifique constituée de trois oxydes spécifiques parmi lesquels l'alumine et l'oxyde de calcium n'a jamais été décrit dans l'art antérieur. En particulier, la composition de brasure spécifique mise en oeuvre selon l'invention qui, de manière étonnante permet le brasage sous une atmosphère oxydante, notamment sous air, de pièces en matériaux à base de carbure de silicium n'est en aucune manière mentionnée dans les documents de l'art antérieur cités plus haut.

Le procédé selon l'invention répond aux besoins, satisfait à l'ensemble des exigences et des critères mentionnés ci-dessus, et ne présente pas les inconvénients des procédés de l'art antérieur.

En particulier, le procédé selon l'invention permet pour la première fois la préparation sous une atmosphère oxydante, notamment sous air, d'assemblages moyennement réfractaires, (c'est-à-dire avec une température de mise en oeuvre supérieure à 850°C, voire 1200°C, selon la composition de brasure) de pièces en matériaux à base de carbure de silicium quelle que soit leur géométrie, même très complexe et/ou leur taille.

Le procédé selon l'invention assure dans tous les cas, notamment, une bonne étanchéité du joint, un bon remplissage du joint par la brasure ainsi qu'une excellente tenue mécanique de l'assemblage au dessus de 500°C.
Le procédé selon l'invention est en outre simple, fiable, facile à mettre en oeuvre et au total peu onéreux.

En d'autres termes, les multiples avantages et effets surprenants de l'invention peuvent être énumérés comme suit, sans que cette énumération soit considérée comme limitative :
- l'assemblage obtenu selon l'invention permet de garantir un très bon accrochage mécanique entre les substrats à base de carbure de silicium pour des températures maximales d'utilisation allant par exemple de 850°C à 1200°C selon la composition de brasure, la composition de l'alliage de brasage. Les ruptures ont lieu en mode "cohésif", c'est-à-dire que les fissures ont lieu dans les substrats à base de carbure de silicium et non pas au niveau de l'interface.
- de même, les joints brasés obtenus selon le procédé sont étanches. Le procédé est par conséquent adapté pour des opérations de scellement devant résister à des températures maximales par exemple entre 850°C et 1200°C selon la composition de l'alliage de brasage.
- une réactivité extrêmement modérée de l'alliage de brasage sur les substrats à base de carbure de silicium a été observée. Il n'y a pas de zones fragilisantes complexes et poreuses au niveau de l'interface.
- une autre propriété remarquable du procédé est l'homogénéité du joint obtenu après brasage.
- le procédé selon l'invention permet le brasage sous une atmosphère oxydante et notamment sous air, ce qui diminue grandement les coûts financiers du procédé par rapport aux procédés dans lesquels l'opération de brasage est réalisée dans un four sous atmosphère protectrice par exemple d'argon, ou sous un vide.
- le procédé de brasage sous une atmosphère oxydante, notamment sous air, selon l'invention peut également être réalisé en faisant appel à une technique de chauffage rapide telle que le chauffage par induction et/ou à un chauffage localisé.

Le comportement des compositions de brasure, en particulier des compositions de brasure pour un brasage sous une atmosphère gazeuse oxydante, notamment sous air, et encore plus particulièrement pour le brasage du SiC, est extrêmement imprévisible et ne peut en aucun cas se déduire du comportement des compositions de brasure connues même voisines.

Rien ne pouvait laisser prévoir que la mise en oeuvre de la composition spécifique selon l'invention dans un procédé de brasage de pièces à base de SiC pourrait permettre un brasage sous une atmosphère gazeuse oxydante, notamment sous air, avec tous les effets bénéfiques et avantages énumérés plus haut.

Les résultats obtenus lors du brasage sous argon ou sous vide ne peuvent pas être transposés au brasage sous une atmosphère oxydante, notamment sous air, en particulier en ce qui concerne le comportement physico-chimique vis-à-vis de l'environnement et par exemple la diffusion de l'oxygène dans le mélange de verre.

L'atmosphère oxydante est généralement une atmosphère contenant de l'oxygène, telle qu'une atmosphère d'air, d'argon oxygéné ou d'hélium oxygéné (mélange d'argon et d'oxygène ou d'hélium et d'oxygène).

Avantageusement, la composition A peut être constituée, en pourcentages massiques, de 75 à 7 % de SiO₂, de 60 à 6 % de Al₂O₃ et de 60 à 10 % de CaO.

Cette plage avantageuse, ce domaine avantageux, de pourcentages massiques pour la composition A peuvent être divisés en trois sous-domaines n°1, n°2, et n°3.

Dans le sous-domaine n°1, la composition A est constituée, en pourcentages massiques, de 70 à 55 % de SiO₂, de 22 à 8 % d'Al₂O₃, et de 35 à 15 % de CaO.

Les compositions préférées de ce sous-domaine n°1 de la composition A sont proches de ou correspondent à la composition suivante : une composition constituée, en pourcentages massiques, de 62 % de SiO₂, de 15 % de Al₂O₃, et de 23% de CaO.

Dans le sous-domaine n°2 la composition A est constituée, en pourcentages massiques, de 55 à 38 % de SiO₂, de 25 à 12 % d'Al₂O₃, et de 45 à 30 % de CaO.

Les compositions préférées de ce sous-domaine n°2 de la composition A sont proches de ou correspondent à la composition suivante : une composition constituée, en pourcentages massiques, de 42 % de SiO₂, de 20 % de Al₂O₃, et de 38 % de CaO.

Dans le sous-domaine n°3, la composition A est constituée, en pourcentages massiques, de 38 à 8 % de SiO₂, de 55 à 8 % d'Al₂O₃, et de 55 à 28 % de CaO.

Les compositions préférées de ce sous-domaine n°3 de la composition A sont proches de, ou correspondent à la composition suivante : une composition constituée, en pourcentages massiques, de 22 % de SiO₂, de 37 % de Al₂O₃, et de 41 % de CaO.

Avantageusement, la composition B est constituée, en pourcentages massiques, de 70 à 35 % de Al₂O₃, de 65 à 25 % de CaO, et de 20 à 1 % de MgO.

Les compositions préférées de ce sous-domaine de la composition B sont proches de, ou correspondent à la composition suivante : une composition constituée en pourcentages massiques, de 50,5 % de Al₂O₃, de 44,0% de CaO, et de 5,5% de MgO.

Les différentes compositions A et B définies par les pourcentages avantageux, préférés et spécifiques précisés ci-dessus ne sont, a fortiori, ni décrites ni suggérées dans l'art antérieur.

Il est éventuellement possible d'ajouter de l'oxyde de titane TiO₂ aux compositions de brasure mises en oeuvre selon l'invention en particulier aux compositions A.

L'oxyde de titane est généralement ajouté à raison de 1% en masse à 10% en masse de la masse totale de la composition, par exemple de la composition A.

Il est également éventuellement possible d'ajouter de l'oxyde de bore B₂O₃ aux compositions de brasure mises en oeuvre selon l'invention afin d'en abaisser le point de fusion.

L'oxyde de bore est généralement ajouté à raison de 1% en masse à 10% en masse de la masse totale de la composition.

Le procédé selon l'invention est généralement réalisé en formant une poudre de composition de brasure, en mettant en suspension cette poudre dans un liant organique de façon à obtenir une suspension ou pâte, et en enduisant au moins une surface des pièces à assembler avec la suspension ou pâte obtenue.

On peut enduire une surface à assembler d'au moins l'une des pièces à assembler avec la suspension ou pâte, puis mettre en contact les surfaces à assembler des pièces de façon à ce que la suspension ou pâte soit intercalée (prise en sandwich) entre celles-ci, ou bien les pièces à assembler sont mises en contact en observant un décalage entre celles-ci de façon à créer une surface susceptible de recevoir la suspension ou pâte à proximité du joint formé par les surfaces à assembler des pièces assembler, puis on dépose la suspension ou pâte sur cette surface.

Le brasage peut être effectué à une température de brasage de 1100°C à 1650°C, de préférence de 1350°C à 1650°C, pendant une durée de 1 à 240 minutes, de préférence de 2 à 30 minutes.

La température de brasage (ou plus exactement la température du palier de brasage) particulièrement recommandée est comprise entre 1350°C et 1650°C et la durée du palier de brasage particulièrement recommandée est comprise entre 2 et 30 minutes.

Toutefois, il est possible, pour certaines compositions, de former un joint brasé à plus basse température, par exemple à 1100°C pour une durée de palier de brasage de 120 minutes. Toutefois, la tenue mécanique du joint sera plus faible que lors d'un brasage à plus haute température (voir exemple 2). Ce brasage à plus basse température peut répondre à certaines applications qui nécessitent un brasage à moyenne température.

L'ensemble formé par les pièces et la composition de brasure peut être amené à la température (palier) de brasage en l'introduisant directement dans un dispositif, tel qu'un four, déjà porté à la température de brasage, ou bien l'ensemble formé par les pièces et la composition de brasure est amené à la température de brasage en observant une montée en température depuis la température ambiante.

L'invention concerne également une suspension ou pâte de brasure comprenant une poudre d'une composition de brasure moyennement réfractaire, non réactive choisie parmi une composition A constituée de Silice (SiO₂), d'alumine (Al₂O₃), et d'oxyde de calcium (CaO) et une composition B, constituée d'alumine (Al₂O₃), d'oxyde de calcium (CaO), et d'oxyde de magnésium (MgO) ; et un liant organique.

L'invention concerne également les suspensions ou pâtes de brasure comprenant une poudre d'une composition de brasure choisie parmi les compositions de brasure, avantageuses, préférées et spécifiques définies par des pourcentages en masse particuliers de chacun des oxydes qui ont été décrites plus haut dans la cadre de l'exposé du procédé selon l'invention ; et un liant organique.

Comme on l'a également précisé plus haut de l'oxyde de bore et/ou de l'oxyde de titane peuvent être éventuellement ajoutés à ces compositions de brasure.

L'invention concerne, en outre, le joint moyennement réfractaire, et l'assemblage comprenant au moins deux pièces en matériaux à base de SiC, obtenus par le procédé selon l'invention, décrit ci-dessus.

D'autres caractéristiques et avantages de l'invention ressortiront mieux à la lecture de la description qui va suivre, donnée à titre illustratif et non limitatif en relation avec les dessins joints, dans lesquels :

### BRÈVE DESCRIPTION DES DESSINS

La figure 1 est une vue schématique des éprouvettes utilisées pour les essais mécaniques, notamment en cisaillement, des joints et assemblages préparés dans les exemples.

La figure 2 est un graphique qui donne l'angle de mouillage (en degrés) en fonction de la durée du palier de chauffage (en minutes) observé dans l'exemple 1 b). Pour la courbe 1, la température du palier de brasage est de 1590°C. Pour la courbe 2, la température du palier de brasage est de 1400°C. Pour la courbe 3, la température du palier de brasage est de 1300°C.

### EXPOSÉ DÉTAILLÉ DE MODES DE RÉALISATION PARTICULIERS

La première étape du procédé selon l'invention consiste, tout d'abord, généralement, à préparer, élaborer une composition de brasure, en d'autres termes un alliage de brasage. L'alliage de brasage selon l'invention est un alliage ternaire, soit du système Silice (SiO₂) - Alumine (Al₂O₃) - Oxyde de Calcium (CaO) (Composition de brasure A), soit du système Alumine (Al₂O₃) - Oxyde de Calcium (CaO) - Oxyde de Magnésium (MgO) (Composition de brasure B). Les proportions massiques préférées pour chacune des compositions A et B ont été mentionnées ci-dessus.

La composition de brasure est, généralement, une composition pulvérulente qui peut être préparée, en synthétisant, tout d'abord, à partir des différents oxydes purs et/ou de composés constitués par plusieurs de ces oxydes un verre contenant ces oxydes.

Des exemples de tels composés constitués par plusieurs oxydes sont la mullite qui est le composé 3Al₂O₃-2SiO₂, le composé CaO-Al₂O₃, et le composé CaO-SiO₂.

Ces oxydes purs ou composés sont généralement sous la forme de poudres. Ils sont pesés en respectant les proportions voulues dans la composition de brasure finale que l'on souhaite obtenir, puis ils sont mélangés et broyés dans tout appareil adéquat, tel qu'un mortier.

Pour un alliage du système SiO₂ - Al₂O₃ - CaO, la brasure est préparée soit à partir de poudres de silice, de mullite (composé défini 3Al₂O₃-2SiO₂) et de la poudre du composé CaO-SiO₂ (par exemple pour la composition A1), soit à partir de poudre d'alumine et de la poudre du composé CaO-SiO₂ (par exemple pour la composition A2), soit à partir de poudre du composé CaO-SiO₂ et du composé CaO-Al₂O₃ (par exemple pour la composition A3).

Pour un alliage du système Al₂O₃ - CaO - MgO, la brasure est préparée à partir des poudres CaO, MgO, Al₂O₃ et CaO-Al₂O₃.

Il est possible d'améliorer les propriétés des verres du système SiO₂-Al₂O₃-CaO (composition de brasure A) en les faisant cristalliser par ajout d'oxyde de titane TiO₂, qui est un agent de nucléation. Typiquement on ajoutera quelques % en masse de TiO₂ par exemple de 1% à 10% en masse de TiO₂ par rapport à la masse totale de la composition de brasure. En revanche, les verres du système Al₂O₃-CaO-MgO cristallisent généralement sans cet ajout. Notons également que la température de fusion de ces alliages de brasage, qu'il s'agisse de la composition de brasure A ou de la composition de brasure B peut être diminuée si besoin par ajout d'oxyde de bore B₂O₃, à raison par exemple de 1% à 10% en masse de B₂O₃ par rapport à la masse totale de la composition de brasure.

Le mélange de poudres broyées est ensuite introduit dans un creuset généralement en platine, et on fait fondre les différents constituants du mélange de poudres en les soumettant par exemple à un palier de 4 heures sous air à 1590°C ou 1640°C selon la composition de l'alliage de brasage. Après refroidissement, on obtient un verre homogène dont le point de fusion varie généralement entre 1200°C et 1600°C selon sa composition.

Le verre obtenu est récupéré, puis broyé dans un mortier ou tout autre dispositif adéquat pour obtenir une poudre de granulométrie adéquate dont les grains ont, par exemple, un diamètre de 10 à 250 µm.

Le verre broyé est ensuite mélangé de manière classique à un cément ou liant organique liquide généralement à la fois visqueux et collant afin d'obtenir une pâte permettant un étalement homogène sur les surfaces des substrats à base de carbure de silicium à braser.

Un tel liant, cément, se décompose généralement par exemple entre 100 et 300°C sans laisser de traces. Il peut s'agir par exemple d'un cément de type NICROBRAZ^{®}.

Des expériences de goutte posée de ce verre sur du SiC ont été réalisées sous air entre 1100°C et 1590°C. Elles ont montré de façon surprenante d'une part qu'il est possible d'atteindre en quelques minutes des angles de contact inférieurs à 60° et d'autre part que les liaisons SiC/verre formées sont fortes.

La deuxième étape du procédé selon l'invention consiste généralement à réaliser l'assemblage par brasage proprement dit.

Préalablement à l'assemblage, les deux (ou plus) surfaces des pièces en matériaux à base de SiC à assembler sont généralement dégraissées dans un solvant organique par exemple du type cétone, ester, éther, alcool, ou un mélange de ceux-ci, etc. un solvant préféré étant l'acétone ou un mélange acétone-alcool éthylique-éther par exemple dans les proportions 1/3, 1/3, 1/3 ; puis séchées.

Les pièces en matériaux à base de SiC à assembler sont en général au nombre de deux, mais on peut aussi assembler simultanément un plus grand nombre de pièces pouvant aller jusqu'à 100.

Par pièce en matériaux à base de SiC, on entend généralement tout élément, ou entité de forme et de taille quelconques entrant par exemple, après assemblage avec une ou plusieurs autres pièces, dans des structures de plus grande dimension.

Selon l'invention, il est possible d'assembler, avec à chaque fois d'excellents résultats des pièces de géométrie, forme complexe et/ou de grande taille.

Par matériau à base de carbure de silicium, on entend généralement ici tous les matériaux comprenant au moins 50% en masse de carbure de silicium, de préférence au moins 80% en masse de carbure de silicium, de préférence encore 100 % en masse de carbure de silicium, dans ce dernier cas le matériau est constitué, composé, uniquement de carbure de silicium.

Comme on l'a déjà précisé plus haut, les matériaux à base de carbure de silicium peuvent être choisis parmi les carbures de silicium purs tels que le carbure de silicium pur α (SiCα) ou β (SiCβ) et les matériaux composites à base de SiC tels que les composites à fibres et/ou à matrice de carbure de silicium.

Comme exemples de matériaux à base de SiC, on peut citer le carbure de silicium dense pur ou carbure de silicium fritté sans pression ("PLS-SiC", à savoir PressureLess Sintered SiC, en anglais) ; le carbure de silicium infiltré Si (appelé SiSiC ou RBSC contenant 5 à 20 % Si) ; le carbure de silicium recristallisé poreux (appelé RSiC) ; le graphite silicium (C-SiC) constitué de graphite et recouvert par une couche de SiC par exemple de 0,1 à 1 mm d'épaisseur ; ainsi que les composites SiC/SiC, par exemple, à fibres ou à « Whiskers » ; les composites C/SiC, par exemple, à fibres ou à « Whiskers » de carbone et à matrice SiC ; et encore les monocristaux de SiC ; et les composites du SiC avec une autre céramique, par exemple, les composites SiC/Si₃N₄ et SiC/TiN.

Les deux pièces ou plus à assembler peuvent être en un même matériau, à base de carbure de silicium par exemple en PLS (Pressureless Sintered) α-SiC, ou en composite SiC-SiC ou chacune des pièces peut être en un matériau différent.

La suspension, pâte de la composition de brasure décrite précédemment, est étalée, enduite, appliquée, de préférence de façon homogène sur la surface d'au moins l'une des pièces en matériau à base de carbure de silicium à assembler puis on met en contact les surfaces des deux pièces à assembler. Cette configuration de brasage est appelée « configuration sandwich » car la pâte de la composition de brasure est placée directement entre les surfaces des pièces à assembler.

La quantité de pâte, suspension de composition de brasure à mettre en oeuvre dans cette configuration est généralement de 4 mg/cm² à 17 mg/cm², par exemple de 11 mg/cm².

Ou bien, on rapproche les surfaces des pièces à assembler de façon à laisser un intervalle généralement de 1 à 200 µm qui sera comblé par effet de capillarité par la composition de brasure, cette dernière étant disposée à proximité de l'intervalle à combler dans un espace ou réservoir ménagé à cet effet, ledit réservoir pouvant avoir des dimensions millimétriques conformément aux connaissances de l'homme du métier en ce domaine.

Cette configuration de brasage est appelée « configuration capillaire ». Avec les compositions de brasure selon l'invention il est possible de réaliser un tel brasage capillaire, à savoir une infiltration de la brasure dans le joint de brasage, sans disposer directement la composition de brasure entre les pièces à assembler comme dans le cas de la « configuration sandwich ».

La quantité de pâte, suspension de composition de brasure à mettre en oeuvre dans cette configuration capillaire est généralement de 4 mg/cm² à 17 mg, par exemple de 11 mg/cm².

Les pièces prêtes à être brasées sont alors disposées dans un dispositif de chauffage tel qu'un four ou soumises à un chauffage par tout autre moyen adéquat.

Conformément à l'invention, le brasage est réalisé sous une atmosphère oxydante telle qu'une atmosphère contenant de l'oxygène, par exemple sous air, et le dispositif de chauffage tel qu'un four, par exemple, est sous une atmosphère d'air, d'argon oxygéné ou d'hélium oxygéné.

Les pièces à assembler sont soumises par exemple dans le four à un cycle thermique de brasage sous une atmosphère oxydante, notamment sous air.

Ainsi l'ensemble formé par les pièces et la composition de brasure peut-il être amené à la température de brasage (palier de brasage) en observant une montée en température de préférence « lente », avec une ou plusieurs rampes de température depuis la température ambiante.

Cette montée en température peut se faire par exemple avec une rampe de température à raison de 400°C/minute.

Le palier de brasage, est généralement effectué à une température correspondant à la température de fusion de la composition de brasure choisie, mais cette température est, de préférence, une température au moins supérieure de 25°C à cette température de fusion.

Selon les compositions, la température de brasage variera donc, par exemple, de 1350°C à 1 650°C.

Une telle température de fusion des compositions permet, selon un autre avantage du procédé de l'invention, une utilisation de l'assemblage, notamment, sous air par exemple jusqu'à 850°C et même jusqu'à 1200°C.

La durée du brasage, c'est-à-dire le cycle thermique de réalisation de l'assemblage est, selon l'invention, généralement de courte durée. La durée du palier de brasage est généralement de 2 à 30 minutes.

Cette durée peut être un peu augmentée pour de très grandes pièces à braser et peut alors aller jusqu'à 200 minutes, voire 240 minutes.

Toutefois, il est possible, pour certaines compositions, de former un joint brasé à plus basse température que la température particulièrement recommandée citée ci-dessus, en-dessous de la température de fusion, dans le domaine visqueux du verre, par exemple à 1100°C pour une durée de palier de brasage qui est alors plus longue et peut atteindre 120 minutes. Toutefois, la tenue mécanique du joint sera plus faible que lors d'un brasage à plus haute température (voir exemple 2). Ce brasage à plus basse température peut répondre à certaines applications qui nécessitent un brasage à moyenne température.

Il est également possible d'introduire directement, « rapidement » les pièces à assembler, prêtes à être brasées, dans un dispositif tel qu'un four déjà porté à la température du palier de brasage, généralement de 1350°C à 1650°C afin de réduire la durée du cycle thermique.

En fin de cycle de brasage, suite au palier de brasage, on refroidit l'assemblage jusqu'à la température ambiante à raison par exemple de 5°C par minute.

Pendant le refroidissement, la brasure se solidifie.

De manière surprenante les assemblages SiC/SiC brasés sous air conformément au procédé de d'invention ne présentent pas ou très peu de porosité avec un remplissage du joint par la brasure supérieur généralement à 90% en volume.

L'assemblage est correct avec peu ou pas de porosité aussi bien lorsque l'on effectue un chauffage avec une montée en température rapide, à savoir avec une introduction des pièces à braser directement dans le four déjà chaud, que lorsque l'on effectue une montée en température lente , à savoir avec une introduction des pièces à braser dans un four froid.

Les assemblages de pièces en carbure de silicium comportant des joints préparés par le procédé selon l'invention permettent de réaliser des structures, appareils, composants de formes complexes ayant des températures d'utilisation élevées pouvant aller généralement jusqu'à 1200°C avec une grande précision.

On sait en effet que les propriétés mécaniques du carbure de silicium :
- grande dureté ;
- bas coefficient de dilatation ;
- résistance à la rupture élevée ;
- bonne résistance au choc thermique ;
- ainsi que sa très bonne conductivité en font un matériau incontournable pour les présentes et les futures applications industrielles à haute température.

De plus, le SiC présente une très bonne résistance chimique aux divers acides, y compris l'acide fluorhydrique et une très bonne résistance à l'oxydation sous air à haute température jusqu'à 1300°C.

En d'autres termes, le procédé selon l'invention peut notamment s'appliquer à la fabrication de tout dispositif, appareil, structure, composant, nécessitant un assemblage moyennement réfractaire entre au moins deux substrats, pièces à base de carbure de silicium en garantissant à la fois une bonne tenue mécanique et une étanchéité satisfaisante au niveau de l'assemblage.

Ce type de dispositif, appareil, structure, composant peut répondre à des besoins dans différents domaines :
- le domaine du génie thermique, notamment pour concevoir des échangeurs de chaleur très performants car le carbure de silicium présente une bonne conductivité thermique et une bonne tenue aux hautes températures dans des environnements extrêmes.
- le domaine du génie mécanique pour réaliser dans des dispositifs embarqués des composants légers, rigides, réfractaires, résistant à l'abrasion et résistants aux sollicitations mécaniques.
- le domaine du génie chimique car le carbure de silicium est résistant à de nombreux produits chimiques corrosifs par exemple comme les bases et les acides forts.
- le domaine du génie nucléaire pour la réalisation du gainage des combustibles.
- les domaines de l'optique spatiale (miroir de télescope en SiC) et de l'aéronautique (pièce en composite SiC/SiC).
- l'électronique de puissance qui utilise le SiC.
   L'invention va maintenant être décrite au moyen des exemples suivants donnés bien entendu à titre illustratif et non limitatif.

### Exemple 1 :

Cet exemple décrit des essais de goutte posée et de force de liaison réalisés avec une composition, alliage de brasure selon l'invention de composition 62 % en masse de SiO₂-15% en masse de Al₂O₃-et 23% en masse de CaO sur du SiC α pur fritté.

### a) Préparation de la composition de brasure

La brasure de composition visée 62 % en masse de SiO₂-15% en masse de Al₂O₃-23% en masse de CaO a été préparée à partir de poudre de SiO₂, de mullite (composé défini 3Al₂O₃-2SiO₂) et du composé CaO-SiO₂.

Ces poudres sont pesées en respectant les proportions, puis mélangées et broyées dans un mortier. Le mélange de poudre est ensuite soumis à un palier de 4 heures sous air à 1590°C. Après refroidissement, on obtient un verre dont le point de fusion est de l'ordre de 1200°C. Les analyses faites à la microsonde X indique que le mélange est homogène et que la composition en masse est 61,2 % SiO₂-15,0% Al₂O₃-23,4% CaO.

Le verre obtenu est récupéré puis concassé dans un mortier.

### b) Essais de « goutte posée » et de force de liaison

Un petit morceau du verre préparé comme décrit ci-dessus, d'une masse comprise entre 10 mg et 40 mg est déposé sur un substrat en carbure de silicium.

Ce substrat et son petit morceau de verre sont introduits dans un four sous air et soumis à un cycle thermique avec un palier de chauffage. Le verre fond lors de ce traitement thermique et forme une goutte que l'on appelle « goutte posée ».

Tous les essais réalisés avec des paliers entre 1300°C et 1590°C (1300, 1400 et 1590°C) ont conduit à un mouillage très rapide du SiC (quelques minutes) avec des angles de contact entre 20° et 50°.

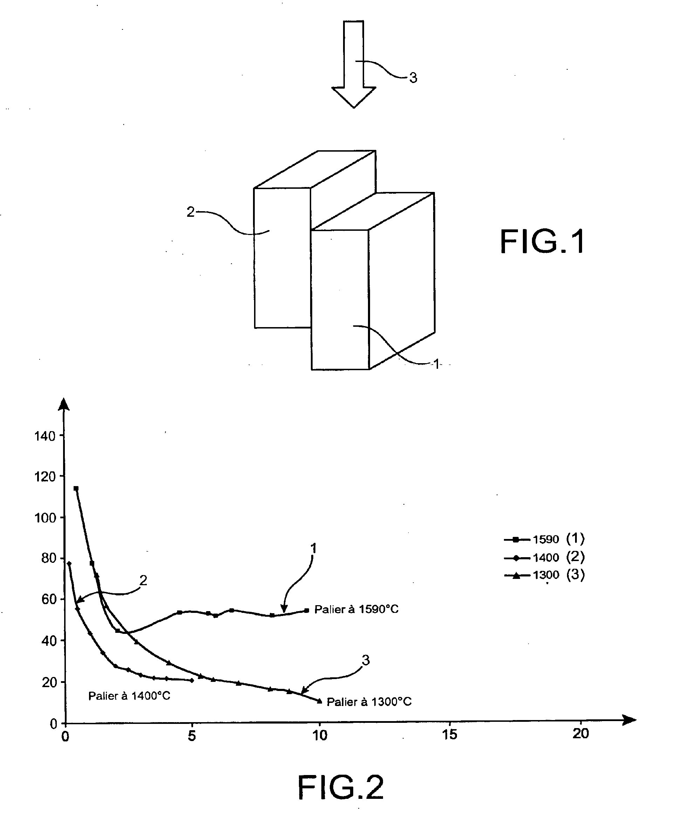

Les résultats de ces essais sont donnés sur la figure 2.

Il est également important de noter que les liaisons SiC / verre ainsi formées sont fortes (rupture cohésive, pas de fissure à l'interface SiC/verre), comme on peut le constater visuellement au cours du refroidissement en sortie du four.

### Exemple 2 :

Cet exemple décrit la préparation de liaisons, assemblages entre deux pièces en carbure de silicium SiC α pur fritté, en mettant en oeuvre le procédé de brasage selon l'invention (brasage en configuration sandwich), et en utilisant une composition de brasure selon l'invention constituée de 62 % en masse de SiO₂ - 15 % en masse de Al₂O₃ et 23% en masse de CaO, et des essais, tests mécaniques réalisés sur ces assemblages.

### a) Préparation de la composition de brasure et des pièces à assembler

Le verre est élaboré selon la procédure décrite dans l'exemple 1. Ensuite il est récupéré, puis broyé dans un mortier. Puis il est mélangé à un cément organique NICROBRAZ^{®} à la fois visqueux et collant afin d'obtenir une pâte facile à étaler.

Les pièces en SiC fritté sont des plaques de dimensions 20 x 20 mm² et d'épaisseur 1 mm ou des disques de diamètre 15 mm et de hauteur 5 mm.

Les deux surfaces de SiC à assembler sont dégraissées dans un solvant organique, puis séchées.

La pâte est étalée de façon homogène sur la surface de l'un des substrats, pièces à base de carbure de silicium à assembler. La quantité mise en place lors de cet essai est de l'ordre de 11 mg/cm², le minimum étant 4 mg/cm² et le maximum 17 mg/cm². Puis, les substrats, pièces sont mis en contact (cette configuration est appelée configuration sandwich).

### b) Brasage

Les pièces, mises en contact et ainsi prêtes à être brasées sont placées dans un four et soumises à un cycle thermique de brasage sous air. L'assemblage obtenu est ensuite refroidi jusqu'à la température ambiante, à raison de 6°C par minute.

Différents cycles thermiques ont été réalisés :
- Une première série a été réalisée en introduisant directement les pièces dans le four chaud à la température du palier de brasage (chauffage rapide).
   - un cycle thermique avec un palier de brasage à 1590°C pendant 5 minutes a permis d'obtenir un joint homogène sans défaut.
   - de la même façon un cycle avec un palier à 1590°C pendant 10 minutes conduit à un joint homogène sans défaut.
   - un cycle thermique avec un palier de brasage à 1400°C pendant 5 minutes donne un joint bien rempli par la brasure (remplissage supérieur à 90% en volume).
- Une seconde série a été réalisée en introduisant les pièces dans le four initialement froid et en leur faisant ensuite subir un chauffage lent jusqu'au palier de brasage (typiquement 4 heures pour atteindre le palier de brasage).
   - dans ces conditions de chauffage lent, un cycle thermique avec un palier de brasage à 1500°C pendant 10 minutes a permis d'obtenir un joint homogène bien rempli (remplissage supérieur à 90% en volume).

### c) Préparation des éprouvettes d'essais mécaniques et résultats des essais mécaniques

- des éprouvettes d'essais mécaniques sont préparées par brasage de 2 pièces de dimensions 15x15x6 mm³ (1,2) avec la pâte de verre décrite ci-dessus en a).
   Les éprouvettes sont schématisées sur la figure 1. Elles sont fixées dans un montage et sollicitées en cisaillement (3) à température ambiante.
   - dans une première série d'essais on prépare cinq éprouvettes par brasage avec la pâte de verre décrite ci-dessus en a) en mettant en oeuvre un cycle de brasage à 1590°C pendant 10 minutes.
   - dans une seconde série d'essais on prépare deux autres éprouvettes d'essais mécaniques avec la pâte de verre décrite c-dessus en b) en mettant en oeuvre un cycle de brasage à 1100°C pendant 120 minutes.
- Résultats des essais mécaniques :
   Première série d'essais : les contraintes à rupture déterminées pour chacune des cinq éprouvettes sont 43,4 MPa ; 23,5 MPa ; 45,7 MPa ; 32,0 MPa ; 65,3 MPa ; soit une moyenne de 42 MPa.
   Seconde série d'essais : les contraintes à rupture déterminées pour chacune des deux éprouvettes sont 11 MPa et 6 MPa.

### Exemple 3 :

Cet exemple décrit la préparation de liaisons, assemblages entre deux pièces en carbure de silicium SiC α pur fritté, en mettant en oeuvre le procédé de brasage selon l'invention (brasage en configuration capillaire) utilisant une composition de brasure selon l'invention constituée de 62 % en masse de SiO₂ - 15 % en masse de Al₂O₃ et 23% en masse de CaO.

### a) Préparation de la composition de brasure et des pièces à assembler

La pâte de brasure est préparée comme décrit dans l'exemple 2. Les pièces en SiC fritté sont des plaques de dimensions 15 x 15 mm² et d'épaisseur 5 mm.

Les deux surfaces de SiC à assembler sont dégraissées dans un solvant organique, puis séchées.

Les substrats, pièces sont mis en contact avec un décalage de quelques mm de façon à laisser un espace pour déposer la pâte de brasure à proximité du joint (cette configuration est appelée configuration capillaire). La pâte est déposée avec une spatule sur la surface disponible au bord du joint. La quantité déposée est de l'ordre de 11 mg/cm², le minimum étant 4 mg/cm² et le maximum 17 mg/cm².

### b) Brasage

Les pièces mises en contact et prêtes à être brasées sont placées dans un four et soumises à un cycle thermique de brasage sous air. Les pièces à braser sont introduites directement dans le four chaud à la température du palier de brasage (chauffage rapide), c'est-à-dire à 1590°C pendant 15 minutes. Ce traitement a permis d'obtenir un joint homogène sans défaut.

### Exemple 4 :

Cet exemple décrit la préparation de liaisons, assemblages entre deux pièces en carbure de silicium SiC α pur fritté, en mettant en oeuvre le procédé de brasage selon l'invention -le brasage étant réalisé en « configuration sandwich »- et en utilisant une composition de brasure selon l'invention constituée de 42 % en masse de SiO₂ - 20 % en masse de Al₂O₃ et 38% en masse de CaO.

Cet exemple décrit en outre des essais, tests mécaniques réalisés sur ces assemblages.

### a) Préparation de la composition de brasure et des pièces à assembler

La brasure de composition 42% en masse de SiO₂-20% en masse de Al₂O₃-38% en masse de CaO a été préparée à partir de poudre d'alumine Al₂O₃ et de la poudre du composé CaO-SiO₂. Ces poudres sont pesées en respectant les proportions, puis mélangées et broyées dans un mortier. Le mélange de poudre est ensuite soumis à un palier de 4 heures sous air à 1590°C. Après refroidissement, on obtient un verre dont le point de fusion est de l'ordre de 1200°C.

Le verre obtenu est récupéré, puis broyé dans un mortier. Puis il est mélangé à un cément organique NICROBRAZ^{®} à la fois visqueux et collant afin d'obtenir une pâte permettant un étalement homogène sur les surfaces à braser.

Les pièces en SiC fritté sont des disques de diamètre 15 mm et d'épaisseur, hauteur, 5 mm.

Les deux surfaces de SiC à assembler sont dégraissées dans un solvant organique, puis séchées.

La pâte est étalée de façon homogène sur la surface de l'un des substrats, pièces à base de carbure de silicium à assembler. La quantité mise en place lors de cet essai est de l'ordre de 11 mg/cm², le minimum étant 4 mg/cm² et le maximum 17 mg/cm². Puis, les substrats, pièces sont mis en contact (cette configuration est appelée configuration sandwich).

### b) Brasage

Les pièces, mises en contact et ainsi prêtes à être brasées sont placées dans un four et soumises à un cycle thermique de brasage sous air. La pièce à braser a été introduite directement dans le four chaud à la température du palier de brasage (chauffage rapide), c'est-à-dire à 1610°C pendant 10 minutes. Ce traitement a permis d'obtenir un joint homogène sans défaut.

L'assemblage obtenu est ensuite refroidi jusqu'à la température ambiante, à raison de 6°C par minute.

### c) Préparation des éprouvettes d'essais mécaniques et résultats des essais mécaniques

- Des éprouvettes d'essais mécaniques sont préparées par brasage de 2 pièces de dimensions 15x15x6 mm³ avec la pâte de verre décrite ci-dessus en a).
   Les éprouvettes sont schématisées sur la figure 1. Elles sont fixées dans un montage et sollicitées en cisaillement à température ambiante.
   On prépare deux éprouvettes par brasage avec la pâte de verre décrite ci-dessus en a) en mettant en oeuvre un cycle de brasage à 1590°C pendant 10 minutes.
- Résultats des essais mécaniques :
   Les contraintes à rupture déterminées pour chacune des deux éprouvettes sont 59 MPa et 56 MPa.

### Exemple 5 :

Cet exemple décrit la préparation de liaisons, assemblages entre deux pièces en carbure de silicium SiC α pur fritté, en mettant en oeuvre le procédé de brasage selon l'invention -le brasage étant réalisé en « configuration sandwich »- et en utilisant une composition de brasure selon l'invention constituée de 22% en masse de SiO₂ - 37% en masse de Al₂O₃ et 41% en masse de CaO.

### a) Préparation de la composition de brasure et des pièces à assembler

La brasure de composition 22% en masse de SiO₂-37% en masse de Al₂O₃-41% en masse de CaO a été préparée à partir de poudre du composé CaO- Al₂O₃ et de poudre du composé CaO-SiO₂. Ces poudres sont pesées en respectant les proportions, puis mélangées et broyées dans un mortier. Le mélange de poudre est ensuite soumis à un palier de 4 heures sous air à 1640°C. Après refroidissement, on obtient un verre dont le point de fusion est de l'ordre de 1600°C.

Le verre obtenu est récupéré, puis broyé dans un mortier. Puis il est mélangé à un cément organique NICROBRAZ^{®} à la fois visqueux et collant afin d'obtenir une pâte permettant un étalement homogène sur les surfaces à braser.

Les pièces en SiC fritté sont des disques de diamètre 15 mm et d'épaisseur, hauteur, 5 mm.

Les deux surfaces de SiC à assembler sont dégraissées dans un solvant organique, puis séchées.

La pâte est étalée de façon homogène avec un pinceau sur la surface de l'un des substrats, pièces à base de carbure de silicium à assembler. La quantité mise en place lors de cet essai est de l'ordre de 11 mg/cm² le minimum étant 4 mg/cm² et le maximum 17 mg/cm². Puis, les substrats, pièces sont mis en contact (cette configuration est appelée configuration sandwich).

### b) Brasage

Les pièces, mises en contact et ainsi prêtes à être brasées sont placées dans un four et soumises à un cycle thermique de brasage sous air. La pièce à braser a été introduite directement dans le four chaud à la température du palier de brasage (chauffage rapide), c'est-à-dire à 1610°C pendant 10 minutes. Ce traitement a permis d'obtenir un joint homogène et bien rempli, c'est-à-dire avec un remplissage supérieur à 90% en volume.

L'assemblage obtenu est ensuite refroidi jusqu'à la température ambiante, à raison de 6°C par minute.

### Exemple 6 :

Cet exemple décrit la préparation de liaisons, assemblages entre deux pièces en carbure de silicium SiC α pur fritté, en mettant en oeuvre le procédé de brasage selon l'invention -le brasage étant réalisé en « configuration sandwich »- et en utilisant une composition de brasure selon l'invention constituée de 50,5% en masse de Al₂O₃, 44% en masse de CaO et 5,5% en masse de MgO.

### a) Préparation de la composition de brasure et des pièces à assembler :

La brasure de composition 50,5% en masse de Al₂O₃-44% en masse de CaO- 5,5%en masse de MgO a été préparée à partir de poudre du composé CaO- Al₂O₃ et des poudres de CaO, MgO et Al₂O₃.Ces poudres sont pesées en respectant les proportions, puis mélangées et broyées dans un mortier. Le mélange de poudre est ensuite soumis à un palier de 4 heures sous air à 1590°C. Après refroidissement, on obtient un verre dont le point de fusion est de l'ordre de 1350°C.

Le verre obtenu est récupéré, puis broyé dans un mortier. Puis il est mélangé à un cément organique NICROBRAZ^{®} à la fois visqueux et collant afin d'obtenir une pâte permettant un étalement homogène sur les surfaces à braser.

Les pièces en SiC fritté sont des disques de diamètre 15 mm et d'épaisseur, hauteur, 5 mm.

Les deux surfaces de SiC à assembler sont dégraissées dans un solvant organique, puis séchées.

La pâte est étalée de façon homogène avec une spatule sur la surface de l'un des substrats, pièces à base de carbure de silicium à assembler. La quantité mise en place lors de cet essai est de l'ordre de 11 mg/cm², le minimum étant 4 mg/cm² et le maximum 17 mg/cm². Puis, les substrats, pièces sont mis en contact (cette configuration est appelée configuration sandwich).

### b) Brasage

Les pièces, mises en contact et ainsi prêtes à être brasées sont placées dans un four et soumises à un cycle thermique de brasage sous air. La pièce à braser a été introduite directement dans le four chaud à la température du palier de brasage (chauffage rapide), c'est-à-dire à 1610°C pendant 10 minutes. Ce traitement a permis d'obtenir un joint homogène et bien rempli, c'est-à-dire avec un remplissage supérieur à 90% en volume.

On note une cristallisation au centre du joint.

L'assemblage obtenu est ensuite refroidi jusqu'à la température ambiante, à raison de 6°C par minute.

### RÉFÉRENCES

[1] Hanson W.B., Fernie J.A., Ironside K.I., Ormston D.R., Knowles K.M., Active metal brazing : the role of the braze alloy, Proceedings from materials solutions '99 on joining of advanced and specialty materials, p. 53, 1999.
[2] Fernie J.A., Hanson W.B., Ormston D.R., Knowles K.M., Ceramic reinforced Metal braze alloys for joining silicon carbide, British ceramic proceedings, n°60, p. 317, 1999.
[3] Prakash P., Mohandas T., Dharma Raju P., Microstructural characterisation of SiC ceramic and SiC-metal active metal brazed joints, Scripta materialia 52, p. 1169, 2005.
[4] Gasse A., Coing-Boyat G., Bourgeois G., *Method using a thick joint for joining parts in SiC-based materials by refractory brazing and refractory thick joint thus obtained,* brevet US-A-5 975 407, 1999.
[5] Montgomery F.C., Streckert H.H., *Braze for Silicon Carbide bodies,* brevet US-A-5 447 683, 1995
[6] Gasse A., *Method for assembling parts made of materials based on SiC by non-reactive refractory brazing, brazing composition*, *and joint and assembly obtained by said method,* US-A1-2003/0038166.
[7] Lemoine P., Ferraris M., Salvo M, Appendino Montorsi M., Vitreous Joining Process of SiCf / SiC Composites, Journal of the European Ceramic Society 22, p. 2343, 2002.
[8] Ferraris M., Salvo M., Isola C., Appendino Montorsi M., Kohyama A., Glass-ceramic joining and coating of SiC / SiC for fusion applications, Journal of Nuclear Materials 258-263, p. 1546, 1998.
[9] Katoh Y., Kotani M., Kohyama A., Montorsi M., Salvo. M, Ferraris M., Microstructure and mechanical properties of low-activation glass-ceramic joining and coating for SiC/SiC composites, Journal of Nuclear Materials 283-287, p. 1262, 2000.
[10] Drouet C., Minjolle L., *Matériaux céramiques vitreux, procédé de fabrication* de *tels matériaux* et *application de ces derniers au collage de pièces céramiques,* FR-A-2 538 370, 1982.
[11] Perham T.J., De Jonghe L.C., MoberlyChan W.J., Joining of silicon carbide with a cordierite glass-ceramic, Journal of the European Ceramic Society 82, p. 297, 1999.
[12] Tamari N., Honda M., Ebata Y., Kinoshita M., Joining of silicon carbide with Si3N4-Y2O3-La2O3-MgO Mixture, Yogyo-Kyokai-Shi 94 [10], p. 1087, 1986
[13] Lee H.L., Nam S.W., Hahn B.S., Joining of silicon carbide using MgO-Al2O3-SiO2 filler, Journal of Materials Science 33, p. 5007, 1998.
[14] Lippmann W., Knorr J., Wolf R., Rasper R., Exner H., Reinecke A.M., Nieher M. , Schreiber R., Laser Joining of silicon - a new technology for ultra-high température, Nuclear Engineering and Design 33, p. 5007, 1998.
[15] Knorr J., Lippmann W., Wolf R., Exner H., Reinecke A-M. , *Method for producing by laser gastight and high-temperature resistant connections of shaped parts made of non-oxidic ceramic,* US-A1-2005/0167409.

## Revendications

1. Procédé d'assemblage moyennement réfractaire d'au moins deux pièces en matériaux à base de carbure de silicium par brasage non réactif sous une atmosphère oxydante, dans lequel on met en contact les pièces avec une composition de brasure non réactive et on chauffe sous une atmosphère oxydante l'ensemble formé par les pièces et la composition de brasure à une température de brasage suffisante pour faire fondre la composition de brasure afin de former un joint moyennement réfractaire, dans lequel la composition de brasure non réactive est une composition A constituée de silice (SiO₂), d'alumine (Al₂O₃), et d'oxyde de calcium (CaO), ou bien une composition B, constituée d'alumine (Al₂O₃), d'oxyde de calcium (CaO), et d'oxyde de magnésium (MgO) ; et dans lequel de l'oxyde de titane est éventuellement ajouté à la composition de brasure, et/ou de l'oxyde de bore est éventuellement ajouté à la composition de brasure

2. Procédé selon la revendication 1 dans lequel l'atmosphère oxydante est une atmosphère contenant de l'oxygène, telle qu'une atmosphère d'air, d'argon oxygéné ou d'hélium oxygéné.

3. Procédé selon la revendication 1 ou 2, dans lequel la composition A est constituée, en pourcentages massiques, de 75 à 7 % de SiO₂, de 60 à 6 % de Al₂O₃ et de 60 à 10 % de CaO.

4. Procédé selon la revendication 3, dans lequel la composition A est constituée, en pourcentages massiques, de 70 à 55 % de SiO₂, de 22 à 8 % de Al₂O₃, et de 35 à 15 % de CaO; par exemple la composition A est constituée, en pourcentages massiques, de 62 % de SiO₂, de 15 % de Al₂O₃, et de 23 % de CaO.

5. Procédé selon la revendication 3, dans lequel la composition A est constituée, en pourcentages massiques, de 55 à 38 % de SiO₂, de 25 à 12 % de Al₂O₃, et de 45 à 30 % de CaO; par exemple la composition A est constituée, en pourcentages massiques, de 42 % de SiO₂, de 20 % de Al₂O₃, et de 38 % de CaO.

6. Procédé selon la revendication 3, dans lequel la composition A est constituée, en pourcentages massiques, de 38 à 8 % de SiO₂, de 55 à 8 % de Al₂O₃, et de 55 à 28 % de CaO ; par exemple la composition A est constituée, en pourcentages massiques, de 22 % de SiO₂, de 37 % de Al₂O₃, et de 41 % de CaO.

7. Procédé selon la revendication 1 ou 2, dans lequel la composition B est constituée, en pourcentages massiques, de 70 à 35 % de Al₂O₃, de 65 à 25 % de CaO, et de 20 à 1 % de MgO; par exemple la composition B est constituée, en pourcentages massiques, de 50,5 % de Al₂O₃, de 44,0% de CaO, et de 5,5% de MgO.

8. Procédé selon l'une quelconque des revendications 1 à 7, dans lequel on forme une poudre de composition de brasure, on met en suspension cette poudre dans un liant organique de façon à obtenir une suspension ou pâte, et on enduit au moins une surface des pièces à assembler avec la suspension ou pâte obtenue.

9. Procédé selon la revendication 8 dans lequel on enduit une surface à assembler d'au moins l'une des pièces à assembler avec la suspension ou pâte, puis on met en contact les surfaces à assembler des pièces de façon à ce que la suspension ou pâte soit Intercalée entre celles-ci.

10. Procédé selon la revendication 8 dans lequel les pièces à assembler sont mises en contact en observant un décalage entre celles-ci de façon à créer une surface susceptible de recevoir la suspension ou pâte à proximité du joint formé par les surfaces à assembler des pièces à assembler, puis on dépose la suspension ou pâte sur cette surface.

11. Procédé selon l'une quelconque des revendications précédentes, dans lequel le brasage est effectué à une température de brasage de 1100°C à 1650°C, de préférence de 1350°C à 1650°C, pendant une durée de 1 à 240 minutes, de préférence de 2 à 30 minutes.

12. Procédé selon l'une quelconque des revendications précédentes dans lequel l'ensemble formé par les pièces et la composition de brasure est amené à la température de brasage en l'introduisant directement dans un dispositif tel qu'un four déjà porté à la température de brasage.

13. Procédé selon l'une quelconque des revendications 1 à 11, dans lequel l'ensemble formé par les pièces et la composition de brasure est amené à la température de brasage en observant une montée en température depuis la température ambiante.

14. Procédé selon l'une quelconque des revendications précédentes dans lequel les matériaux à base de carbure de silicium sont choisis parmi les carbures de silicium purs tels que le carbure de silicium pur α (SiCα) ou β (SiCβ) et les matériaux composites à base de SiC tels que les composites à fibres et/ou à matrice de carbure de silicium.

15. Procédé selon l'une quelconque des revendications précédentes dans lequel les matériaux à base de carbure de silicium sont choisis parmi le carbure de silicium fritté sans pression ("PLS-SiC") ; le carbure de silicium infiltré Si ("SiSiC" ou "RBSC") ; le carbure de silicium recristallisé poreux ("RSiC"); le graphite silicium ("C-SiC") constitué de graphite et recouvert par une couche de SiC ; les composites SiC/SiC, par exemple, à fibres ou à « whiskers » ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

16. Procédé selon l'une quelconque des revendications 1 à 15, dans lequel lesdits matériaux à base de carbure de silicium ont une teneur en carbure de silicium au moins égale à 50 % en masse, de préférence au moins égale à 80% en masse, de préférence encore égale à 100% en masse.

17. Suspension, pâte de brasure comprenant une poudre d'une composition de brasure moyennement réfractaire non réactive telle que définie dans l'une quelconque des revendications 1, et 3 à 7 ; et un liant organique.

18. Joint moyennement réfractaire susceptible d'être obtenu par le procédé selon l'une quelconque des revendications 1 à 16.

19. Assemblage comprenant au moins deux pièces en matériaux à base de SiC, susceptible d'être obtenu par le procédé selon l'une quelconque des revendications 1 à 16.

## Patentansprüche

1. Verfahren zum mittelmäßig feuerfesten Verbinden wenigstens zweier Teile aus Materialien auf der Grundlage von Siliciumcarbid durch nicht-reaktives Löten in einer oxidierenden Atmosphäre, bei dem die Teile mit einer nicht-reaktiven Lötzusammensetzung in Kontakt gebracht werden und die durch die Teile und die Lötzusammensetzung gebildete Einheit auf eine Löttemperatur erhitzt wird, die zum Schmelzen der Lötzusammensetzung unter Bilden einer mittelmäßig feuerfesten Fuge ausreichend ist, bei dem die nicht-reaktive Lötzusammensetzung eine Zusammensetzung A, die sich aus Siliciumoxid (SiO₂), Aluminiumoxid (Al₂O₃) und Calciumoxid (CaO) zusammensetzt, oder eine Zusammensetzung B ist, die sich aus Aluminiumoxid (Al₂O₃), Calciumoxid (CaO) und Magnesiumoxid (MgO) zusammensetzt, und bei dem der Lötzusammensetzung gegebenenfalls Titanoxid und/oder der Lötzusammensetzung gegebenenfalls Boroxid zugesetzt wird.

2. Verfahren gemäß Anspruch 1, bei dem die oxidierende Atmosphäre Sauerstoff enthält, wie etwa eine Atmosphäre aus Luft, sauerstoffhaltigem Argon oder sauerstoffhaltigem Helium.

3. Verfahren gemäß Anspruch 1 oder 2, bei dem sich die Zusammensetzung A in Massenprozent aus 75 bis 7% SiO₂, 60 bis 6% Al₂O₃ und 60 bis 10% CaO zusammensetzt.

4. Verfahren gemäß Anspruch 3, bei dem sich die Zusammensetzung A in Massenprozent aus 70 bis 55 % SiO₂, 22 bis 8 % Al₂O₃ und 35 bis 15 % CaO zusammensetzt und die Zusammensetzung A sich zum Beispiel in Massenprozent aus 62 % SiO₂, 15 % Al₂O₃ und 23 % CaO zusammensetzt.

5. Verfahren gemäß Anspruch 3, bei dem sich die Zusammensetzung A in Massenprozent aus 55 bis 38 % SiO₂, 25 bis 12 % Al₂O₃ und 45 bis 30 % CaO zusammensetzt und die Zusammensetzung A sich zum Beispiel in Massenprozent aus 42 % SiO₂, 20 % Al₂O₃ und 38 % CaO zusammensetzt.

6. Verfahren gemäß Anspruch 3, bei dem sich die Zusammensetzung A in Massenprozent aus 38 bis 8 % SiO₂, 55 bis 8 % Al₂O₃ und 55 bis 28 % CaO zusammensetzt und die Zusammensetzung A sich zum Beispiel in Massenprozent aus 22 % SiO₂, 37 % Al₂O₃ und 41 % CaO zusammensetzt.

7. Verfahren gemäß Anspruch 1 oder 2, bei dem sich die Zusammensetzung B in Massenprozent aus 70 bis 35 % Al₂O₃, 65 bis 25 % CaO und 20 bis 1 % MgO zusammensetzt und die Zusammensetzung B sich zum Beispiel in Massenprozent aus 50,5 % Al₂O₃, 44,0 % CaO und 5,5 % MgO zusammensetzt.

8. Verfahren gemäß einem der Ansprüche 1 bis 7, bei dem eine Lötpulverzusammensetzung gebildet wird, dieses Pulver unter Erhalten einer Suspension oder Paste so in einem organischen Lösungsmittel suspendiert wird und wenigstens eine Oberfläche der zusammen zu setzenden Teile mit der erhaltenen Suspension oder Paste überzogen wird.

9. Verfahren gemäß Anspruch 8, bei dem eine zusammen zu setzende Oberfläche wenigstens eines der zusammen zu setzenden Teile mit der Suspension oder Paste überzogen wird und dann die zusammen zu setzenden Oberflächen der Teile so in Kontakt gebracht werden, dass sich die Suspension oder Paste zwischen diese einlagert.

10. Verfahren gemäß Anspruch 8, bei dem die zusammen zu setzenden Teile unter Einhalten eines Versatzes dazwischen so in Kontakt gebracht werden, dass eine zur Aufnahme der Suspension oder Paste befähigte Oberfläche nahe des durch die zusammen zu setzenden Oberflächen der zusammen zu setzenden Teile gebildeten Zwischenraums geschaffen wird und dann die Suspension oder Paste auf diese Oberfläche aufgetragen wird.

11. Verfahren gemäß einem der vorangehenden Ansprüche, bei dem das Löten bei einer Löttemperatur von 1100 °C bis 1650 °C, vorzugsweise von 1350 °C bis 1650 °C, über eine Dauer von 1 bis 240 Minuten, vorzugsweise 2 bis 30 Minuten durchgeführt wird.

12. Verfahren gemäß einem der vorangehenden Ansprüche, bei dem die durch die Teile und die Lötzusammensetzung gebildete Einheit durch direktes Einführen in eine bereits auf die Löttemperatur gebrachte Vorrichtung, wie einen Ofen, auf die Löttemperatur eingestellt wird.

13. Verfahren gemäß einem der Ansprüche 1 bis 11, bei dem die durch die Teile und die Lötzusammensetzung gebildete Einheit unter Überwachen eines Temperaturanstiegs von Raumtemperatur an auf die Löttemperatur eingestellt wird.

14. Verfahren gemäß einem der vorangehenden Ansprüche, bei dem die Materialien auf der Grundlage von Siliciumcarbid aus reinen Siliciumcarbiden wie etwa reinem α- (SiCα) oder β-Siliciumcarbid (SiCβ) und Verbundmaterialien auf der Grundlage von SiC wie etwa Verbundmaterialien mit Fasern und/oder einer Matrix aus Siliciumcarbid ausgewählt sind.

15. Verfahren gemäß einem der vorangehenden Ansprüche, bei dem die Materialien auf der Grundlage von Siliciumcarbid aus drucklos gesintertem Siliciumcarbid ("PLS-SiC"); siliciuminfiltriertem Siliciumcarbid ("SiSiC" oder "RBSC"); porösem, rekristalliertem Siliciumcarbid ("RSiC"); Graphit-Silicium ("C-SiC"), das sich aus Graphit zusammensetzt und mit einer Schicht aus SiC überzogen ist; SiC/SiC-Verbundmaterialien, zum Beispiel mit Fasern oder "Whiskern"; C/SiC-Verbundmaterialien, zum Beispiel mit Kohlenstofffasern oder -"Whiskern" und mit einer SiC-Matrix;, SiC-Einkristallen; und Verbundmaterialien aus SiC mit einem anderen keramischen Material wie zum Beispiel den Verbundmaterialien SiC/Si₃N₄ und SiC/TiN ausgewählt sind.

16. Verfahren gemäß einem der Ansprüche 1 bis 15, bei dem die Materialien auf der Grundlage von Siliciumcarbid einen Gehalt an Siliciumcarbid von mindestens 50 Massen-%, vorzugsweise mindestens 80 Massen-% und noch bevorzugter 100 Massen-% aufweisen.

17. Lötsuspension oder -paste umfassend eine wie in einem der Ansprüche 1 und 3 bis 7 definierte nicht-reaktive, mittelmäßig feuerfeste Lötpulverzusammensetzung und ein organisches Lösungsmittel.

18. Mittelmäßig feuerfeste Fuge erhältlich durch das Verfahren eines der Ansprüche 1 bis 16.

19. Verbindung umfassend wenigstens zwei Teile aus einem Material auf der Grundlage von SiC, die durch das Verfahren eines der Ansprüche 1 bis 16 erhalten werden kann.

## Claims

1. Process for the moderately refractory assembly of at least two parts made of silicon carbide-based materials by non-reactive brazing in an oxidizing atmosphere, in which the parts are placed in contact with a non-reactive brazing composition, and the assembly formed by the parts and the brazing composition is heated under an oxidizing atmosphere to a brazing temperature that is sufficient to melt the brazing composition in order to form a moderately refractory joint, wherein, the non-reactive brazing composition is a composition A composed of silica (SiO₂), alumina (Al₂O₃) and calcium oxide (CaO), or alternatively a composition B composed of alumina (Al₂O₃), calcium oxide (CaO), and magnesium oxide (MgO); and wherein titanium oxide is optionally added to the brazing composition, and/or boron oxide is optionally added to the brazing composition.

2. Process according to Claim 1, wherein the oxidizing atmosphere is an atmosphere containing oxygen, such as an atmosphere of air, of oxygenated argon or of oxygenated helium.

3. Process according to Claim 1 or 2, in which composition A is composed, as mass percentages, of 75% to 7% SiO₂, 60% to 6% Al₂O₃, and 60% to 10% CaO.

4. Process according to Claim 3, in which composition A is composed, as mass percentages, of 70% to 55% SiO₂, 22% to 8% Al₂O₃, and 35% to 15% CaO; for example composition A is composed, as mass percentages, of 62% SiO₂, 15% Al₂O₃, and 23% CaO.

5. Process according to Claim 3, in which composition A is composed, as mass percentages, of 55% to 38% SiO₂, 25% to 12% Al₂O₃, and 45% to 30% CaO; for example composition A is composed, as mass percentages, of 42% SiO₂, 20% Al₂O₃, and 38% CaO.

6. Process according to Claim 3, in which composition A is composed, as mass percentages, of 38% to 8% SiO₂, 55% to 8% Al₂O₃, and 55% to 28% CaO; for example composition A is composed, as mass percentages, of 22% SiO₂, 37% Al₂O₃, and 41% CaO.

7. Process according to Claim 1 or 2, in which composition B is composed, as mass percentages, of 70% to 35% Al₂O₃, 65% to 25% CaO, and 20% to 1% MgO; for example composition B is composed, as mass percentages, of 50.5% Al₂O₃, 44.0% CaO, and 5.5% MgO.

8. Process according to any one of Claims 1 to 7, in which a brazing composition powder is formed, this powder is suspended in an organic binder so as to obtain a suspension or paste, and at least one surface of the parts to be assembled is coated with the suspension or paste obtained.

9. Process according to Claim 8, in which a surface to be assembled of at least one of the parts to be assembled is coated with the suspension or paste, and the surfaces to be assembled of the parts are then placed in contact so that the suspension or paste is intercalated between them.

10. Process according to Claim 8, in which the parts to be assembled are placed in contact while keeping them offset so as to create a surface capable of receiving the suspension or paste close to the joint formed by the surfaces to be assembled of the parts to be assembled, and the suspension or paste is then applied on this surface.

11. Process according to any one of the preceding claims, in which the brazing is performed at a brazing temperature of 1100°C to 1650°C and preferably from 1350°C to 1650°C, for a time of 1 to 240 minutes and preferably from 2 to 30 minutes.

12. Process according to any one of the preceding claims, in which the assembly formed by the parts and the brazing composition is brought to the brazing temperature by introducing it directly into a device such as an oven already brought to the brazing temperature.

13. Process according to any one of Claims 1 to 11, in which the assembly formed by the parts and the brazing composition is brought to the brazing temperature by applying a temperature rise from room temperature.

14. Process according to any one of the preceding claims, in which the silicon carbide-based materials are chosen from pure silicon carbides such as pure α silicon carbide (α-SiC) or β silicon carbide (β-SiC) and SiC-based composite materials such as composites with silicon carbide fibres and/or with a silicon carbide matrix.

15. Process according to any one of the preceding claims, in which the silicon carbide-based materials are chosen from pressureless sintered silicon carbide (PLS-SiC); Si-infiltrated silicon carbide (SiSiC or RBSC); porous recrystallized silicon carbide (RSiC); silicon graphite (C-SiC) composed of graphite and covered with a layer of SiC;
SiC/SiC composites, for example containing fibres or "whiskers"; C/SiC composites, for example, containing carbon fibres or "whiskers" and an SiC matrix; SiC monocrystals; SiC composites with another ceramic, for example SiC/Si₃N₄ and SiC/TiN composites.

16. Process according to any one of Claims 1 to 15, in which said silicon carbide-based materials have a silicon carbide content at least equal to 50% by mass, preferably at least equal to 80% by mass and more preferably equal to 100% by mass.

17. Brazing suspension, paste, comprising a powder of a non-reactive moderately refractory brazing composition, as defined in any one of claims 1, and 3 to 7; and an organic binder.

18. Moderately refractory joint obtainable by the process according to any one of Claims 1 to 16.

19. Assembly comprising at least two parts made of SiC-based materials, obtainable by the process according to any one of Claims 1 to 16.
